# EUROPÄISCHE PATENTANMELDUNG

(11) **EP 1 840 372 A2**
(43) Veröffentlichungstag der Anmeldung: **03.10.2007**
(21) Anmeldenummer: 07004636.2
(22) Anmeldetag: 07.03.2007
(51) Int. Cl.: F03D 1/06

(54) **Befestigung eines Rotorblatts einer Windenergieanlage**

(30) Priorität: 30.03.2006 DE 102006014742
(71) Anmelder: NORDEX ENERGY GmbH, 22848 Norderstedt (DE)
(72) Erfinder: Birkemeyer, Jochen, Dr., 22848 Norderstedt (DE); Rochholz, Hermann, Dr., 22848 Norderstedt (DE)
(74) Vertreter: Hauck Patent- und Rechtsanwälte

(57) **Zusammenfassung**

Rotorblatt für Windenergieanlagen mit einer Vielzahl von quer zur Längsachse (14,16) des Rotorblatts verlaufenden Querbohrungen im Bereich der Blattwurzel, die zur Aufnahme von Querbolzen vorgesehen sind, wobei zur Befestigung des Rotorblatts an einer Rotorblatthalterung Zugelemente an den Querbolzen angreifen, wobei mindestens eine der Querbohrungen einen Abstand von der nabenseitigen Rotorblattkante (10) aufweist, der von dem Abstand einer weiteren Querbohrung verschieden ist.

## Beschreibung

Die Erfindung bezieht sich auf ein Rotorblatt für Windenergieanlagen mit einer Vielzahl von quer zur Längsachse des Rotorblatts verlaufenden Querbohrungen im Bereich der Blattwurzeln, die zur Aufnahme von Querbolzen vorgesehen sind, wobei zur Befestigung des Rotorblatts an einer Rotorblatthalterung Zugelemente an den Querbolzen angreifen.

Derartige Befestigungslösungen für Rotorblätter mit Querbolzen und Zugelementen sind allgemein bekannt. Bei modernen Windenergieanlagen treten im Verbindungsbereich zwischen Nabe und Rotorblättern hohe mechanische Belastungen auf. Diese Belastungen nehmen mit immer größer werdenden Windenergieanlagen noch deutlich zu. In Verbindung mit der angestrebten Leichtbauweise stellt dies höchste Anforderungen an die Konstruktion der Rotorblattbefestigung. Dementsprechend sind eine ganze Reihe von unterschiedlichen Verbesserungsansätzen des Grundprinzips erdacht worden.

So ist aus DE 3 103 710 A1 bekannt geworden, ein Rotorblatt aus faserverstärktem Kunststoff im Bereich der Blattwurzel mit einem kreisringförmigen Anschlußende zu versehen und die Faserorientierung in diesem Bereich auf bestimmte Weise im Wesentlichen in Längsrichtung des Rotorblatts zu führen, um größere Kräfte im Bereich der Querbohrungen aufnehmen zu können. Weiter wurde die Schwächung der Rotorblattschalen durch die Querbohrungen erkannt und eine Verstärkung der Schalenwurzel durch zusätzliche Decklagen mit kreuzweiser Faserorientierung empfohlen. Eine derartige Verstärkung der Rotorblattschalen durch zusätzliche Materiallagen stößt bei großen Rotorblättern an ihre Grenzen, weil das Abführen der bei der Aushärtung des Matrixwerkstoffs des faserverstärkten Kunststoffs in einer exothermen Reaktion auftretenden Wärme mit zunehmender Dicke der Wandung problematisch ist. Außerdem erhöht sich der erforderliche Materialeinsatz.

Aus DE 3 109 566 A1 ist bekannt, zwei Rotorblattsegmente mit Dehnschrauben zu verbinden, die mit Querbolzen in einem Rotorblattsegment verankert und mit einer speziellen Vorrichtung unter eine definierte Vorspannung gesetzt werden.

Aus US 4,236,873 ist bekannt geworden, den Faserverbundwerkstoff des Rotorblatts im Bereich der Befestigung durch stählerne innere und äußere Adapterhülsen zu verstärken. Die Querbolzen verlaufen durch den Faserverbundwerkstoff und beide metallischen Verstärkungen.

DE 197 33 372 C1 zeigt eine alternative Befestigungstechnik, bei der die Querbolzen nicht in durch die gesamte Rotorblattschale hindurchverlaufenden Querbohrungen sitzen, sondern die Querbolzen kürzer ausgeführt und in Sackbohrungen auf der inneren und äußeren Seite der Rotorblattschale gelagert sind und mit entsprechenden Zugelementen zusammenwirken. Die Schwächung des Rotorblatts durch die Querbohrungen kann dadurch reduziert werden.

Eine andere Möglichkeit der Rotorblattbefestigung ist aus DE 103 24 166 B4 bekannt geworden. Dabei erstrecken sich die Querbolzen durch die gesamte Rotorblattschale und stehen an dessen innerer und äußerer Seite über. Die Zugelemente sind im Bereich dieser Überstände mit den Querbolzen verbunden und verlaufen außerhalb der Rotorblattschale. Dadurch soll eine zusätzliche Schwächung des Rotorblatts durch die üblicherweise im Inneren der Rotorblattschale verlaufenden Bohrungen für die Zugelemente vermieden werden.

Schließlich sind aus DE 102 14 340 C1 und WO03/057457 A1 weitere Techniken bekannt geworden, bei denen zur Verankerung der Zugelemente in dem Rotorblatt spezielle, komplizierter geformte Befestigungselemente in die Rotorblattschalen eingearbeitet werden.

Davon ausgehend ist es die Aufgabe der Erfindung, ein Rotorblatt für Windenergieanlagen zur Verfügung zu stellen, dass die bekannte, einfache Befestigungslösung mit Querbolzen und Zugelementen hinsichtlich der erreichbaren Festigkeit verbessert. Diese Aufgabe wird gelöst durch ein Rotorblatt mit den Merkmalen des Anspruchs 1. Vorteilhafte Ausgestaltungen sind in den Unteransprüchen angegeben.

Das erfindungsgemäße Rotorblatt hat eine Vielzahl von quer zur Längsachse des Rotorblatts verlaufenden Querbohrungen im Bereich der Blattwurzel, die zur Aufnahme von Querbolzen vorgesehen sind, wobei zur Befestigung des Rotorblatts an einer Rotorblatthalterung Zugelemente an den Querbolzen angreifen. Das Rotorblatt zeichnet sich dadurch aus, dass mindestens eine der Querbohrungen einen Abstand von der nabenseitigen Rotorblattkante aufweist, der von dem Abstand einer weiteren Querbohrung von der nabenseitigen Rotorblattkante verschieden ist.

Der Erfindung liegt die Erkenntnis zugrunde, dass die Schwächung des Rotorblatts durch die Querbohrungen bei der herkömmlichen Anordnung der Querbohrungen in gleichmäßigem Abstand von der nabenseitigen Rotorblattkante dadurch verstärkt wird, dass bei eng benachbarten Querbohrungen relativ wenig Material zwischen den Bohrungen stehen bleibt. Außerdem kann bei der herkömmlichen Anordnung der Querbohrungen ein Materialbruch entlang der von den Querbohrungen gebildeten geraden Linie begünstigt werden. Weiterhin wird bei Verwendung des üblichen Triax-Gewebes, bei dem Teile der Faserbündel in einem Winkel von etwa 45° zur Längsachse des Rotorblatts verlaufen, unter Umständen ein Großteil dieser angewinkelten Fasern durch die eng benachbarten Querbohrungen durchtrennt, was die Belastbarkeit zusätzlich herabsetzt.

Die Rotorblatthalterung kann unmittelbar an der Nabe der Windenergieanlage ausgebildet sein oder von einem separaten Befestigungsflansch, der seinerseits mit der Nabe verbunden ist, gebildet sein. Als Zugelemente, die an den Querbolzen angreifen, kommen insbesondere Gewindebolzen in Betracht, die mit den Querbolzen verschraubt werden. Die quer zur Längsachse des Rotorblatts verlaufenden Querbohrungen können auch einen von 90° verschiedenen Winkel mit der Längsachse bilden, "quer" ist also nicht auf die orthogonale Richtung beschränkt.

Durch die erfindungsgemäße Anordnung der Querbohrungen wird erreicht, dass sich die Abstände zwischen zwei Querbohrungen bei gleicher Anzahl der Querbohrungen gegenüber einer Anordnung auf einer geraden Linie vergrößert. Dadurch wird eine größere Stabilität des zwischen zwei Querbohrungen stehenbleibenden Materials erzielt. Die Gefahr eines Materialbruchs entlang der Verbindungslinie zwischen den Querbohrungen wird verringert. Ein weiterer Vorteil ist, dass der Blattflansch im Bereich der Querbolzen dünner ausgeführt werden kann, wodurch sich die Biegebelastung der entsprechend kürzeren Querbolzen verringert. Gegebenenfalls kann auch die Anzahl der Bolzen erhöht werden. Insgesamt wird die Festigkeit der Rotorblattbefestigung verbessert.

Besonders vorteilhaft ist, dass die erfindungsgemäße Ausführung eines Rotorblatts mit den herkömmlichen Fertigungstechniken sehr einfach möglich ist. Es entstehen dadurch keine nennenswerten zusätzlichen Kosten für die Fertigung des Rotorblatts oder eine Umstellung einer bestehenden Produktion.

Gemäß einer bevorzugten Ausgestaltung der Erfindung sind die Querbohrungen auf zwei parallel um die Rotorblattwurzel umlaufenden Kreisen angeordnet, die einen unterschiedlichen Abstand von der nabenseitigen Rotorblattkante aufweisen. Es werden also nur zwei unterschiedliche Abstände zwischen den Querbohrungen und der nabenseitigen Rotorblattkante verwendet.

Bevorzugt sind die Querbohrungen auf den beiden umlaufenden Kreisen versetzt angeordnet, sodass die Verbindungslinie zwischen benachbarten Querbohrungen eine Zickzacklinie ist. Weiter ist bevorzugt, dass die Abstände zwischen je zwei auf der Zickzacklinie benachbarten Querbohrungen gleich groß sind. Es ergibt sich somit eine symmetrische Zickzacklinie mit gleichmäßig breiten Stegen zwischen zwei benachbarten Querbohrungen.

In einer bevorzugten Ausgestaltung der Erfindung ist der Abstand zwischen den beiden parallelen Kreisen etwa halb so groß wie der Abstand zwischen zwei auf einem Kreis benachbarten Querbohrungen. Durch diese spezielle Anordnung der Querbohrungen weisen die Zacken der Zickzacklinie, d.h. die von einer Querbohrung zu ihren benachbarten Querbohrungen verlaufenden Verbindungslinien, einen Winkel von 90° auf.

Gemäß einer weiteren Ausgestaltung der Erfindung ist zu jeder Querbohrung eine quer zur Richtung der Querbohrung verlaufende Längsbohrung vorgesehen, die von der Querbohrung zur nabenseitigen Rotorblattkante führt und die die Zugelemente aufnimmt. In diesem Fall befinden sich die Zugelemente also im Inneren der Rotorblattschale. Alternativ ist es auch möglich, die Zugelemente außerhalb der Rotorblattschale zu führen, wodurch eine zusätzliche Schwächung der Rotorblattschale durch die Längsbohrungen vermieden werden kann. Bei Führung des Zugelements innerhalb einer Längsbohrung in der Rotorblattschale kann allerdings mit einem einzigen Zugelement eine vorteilhafte, symmetrische Verbindung zu dem Querbolzen hergestellt werden.

In einer weiteren Ausgestaltung der Erfindung sind die Querbohrungen als Sackbohrungen ausgeführt. Das heißt, die Querbohrungen sind nicht als Durchgangsbohrungen, die durch die gesamte Wandung des Rotorblatts verlaufen, ausgeführt, sondern dienen der Aufnahme von kürzeren Querbolzen. Die Schwächung des Rotorblatts durch jede einzelne Querbohrung kann dadurch verringert werden.

Gemäß einer weiteren bevorzugten Ausgestaltung der Erfindung ist die Wandung des Rotorblatts im Bereich der Querbohrungen verstärkt. Zur Verstärkung kann die Materialstärke der Rotorblattschale in diesem Bereich vergrößert werden, beispielsweise durch zusätzliche Faserlagen, oder es können zusätzliche Verstärkungselemente auf die Wandung des Rotorblatts aufgebracht oder in dieses eingearbeitet werden.

Nachfolgend wird die Erfindung anhand eines in zwei Figuren dargestellten Ausführungsbeispiels näher erläutert. Es zeigen.
- Fig. 1: eine schematische, perspektivische Ansicht der Blattwurzel eines erfindungsgemäßen Rotorblatts,
- Fig. 2: einen Querschnitt durch eine Wandung eines erfindungsgemäßen Rotorblatts in dessen Längsrichtung, das mit einer Rotorblatthalterung verbunden ist, entlang einer Quer- und Längsbohrung,
- Fig. 3: eine schematische Ansicht der Quer- und Längsbohrungen in einem Ausschnitt einer Rotorblattschale.

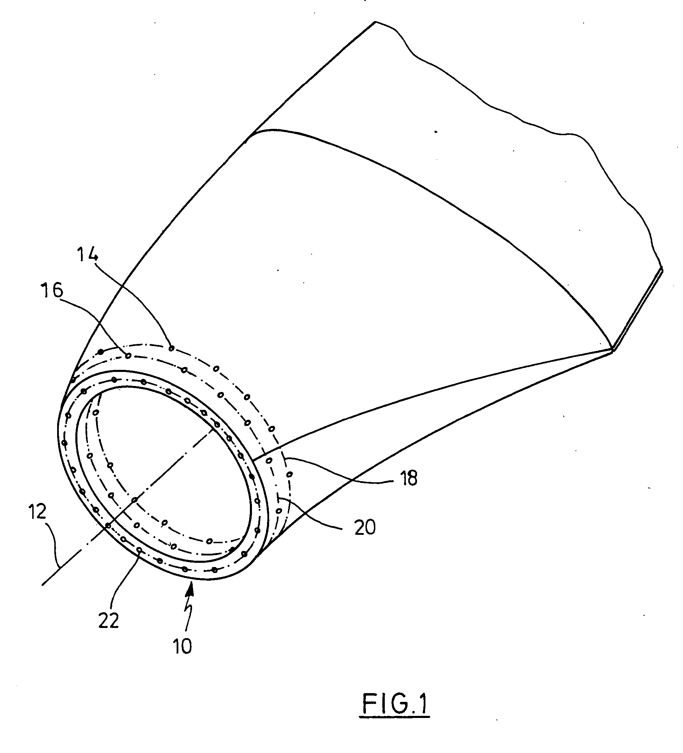

Das Rotorblatt, dessen Blattwurzelbereich in Figur 1 skizziert ist, ist in an sich bekannter Weise aus zwei Halbschalen aus faserverstärktem Kunststoff aufgebaut. Am nabenseitigen Ende des Rotorblatts befindet sich die nabenseitige Rotorblattkante 10, die von einer annähernd kreisförmigen Ringfläche gebildet wird. Die Breite des Rings entspricht der Materialstärke der Rotorblattschalen in diesem Bereich. Die Längsachse des Rotorblatts ist bei 12 angedeutet. Die nabenseitige Rotorblattkante 10 ist im Wesentlichen senkrecht zur Längsachse 12 ausgerichtet.

Das Rotorblatt ist mit einer Vielzahl von Querbohrungen 14, 16 versehen. Die Querbohrungen 14, 16 sind quer zur Längsachse 12 des Rotorblatts ausgerichtet, im dargestellten Beispiel annähernd senkrecht dazu. Abhängig von der Formgebung des Rotorblatts und der in Figur 1 nicht dargestellten Rotorblatthalterung 38 an der Nabe der Windenergieanlage können sie jedoch auch gegenüber der Längsachse 12 des Rotorblatts geneigt sein.

Die Querbohrungen 14 sind auf einem bei 18 gestrichelt angedeuteten Kreis, der um die gesamte Rotorblattwurzel umläuft, angeordnet. Entsprechend befinden sich die Querbohrungen 16 auf einem zweiten umlaufenden Kreis 20. Dadurch haben sämtliche auf dem Kreis 20 angeordnete Querbohrungen 16 einen gleichmäßigen Abstand von der nabenseitigen Kante 10 des Rotorblatts. Der Abstand der Querbohrungen 14, die auf dem Kreis 18 angeordnet sind, ist ebenfalls einheitlich und beträgt im dargestellten Beispiel etwa das Doppelte des Abstands der Querbohrungen 16 von der nabenseitigen Rotorblattkante 10.

Weiter zeigt die Figur 1 Längsbohrungen 22, die jeweils einer Querbohrung 14, 16 zugeordnet sind. Jede Längsbohrung 22 führt von der nabenseitigen Rotorblattkante 10 zu einer Querbohrung 14, 16. Die Längsbohrungen 22 haben also zwei unterschiedliche Längen, je nachdem, ob sie zu einer Querbohrung 14 auf dem Kreis 18, oder zu einer Querbohrung 16 auf dem Kreis 20 gehören. Die Längsbohrungen 22 dienen zur Aufnahme von Zugelementen, mit denen die in die Querbohrungen einzubringenden Querbolzen mit der Rotorblatthalterung verspannt werden.

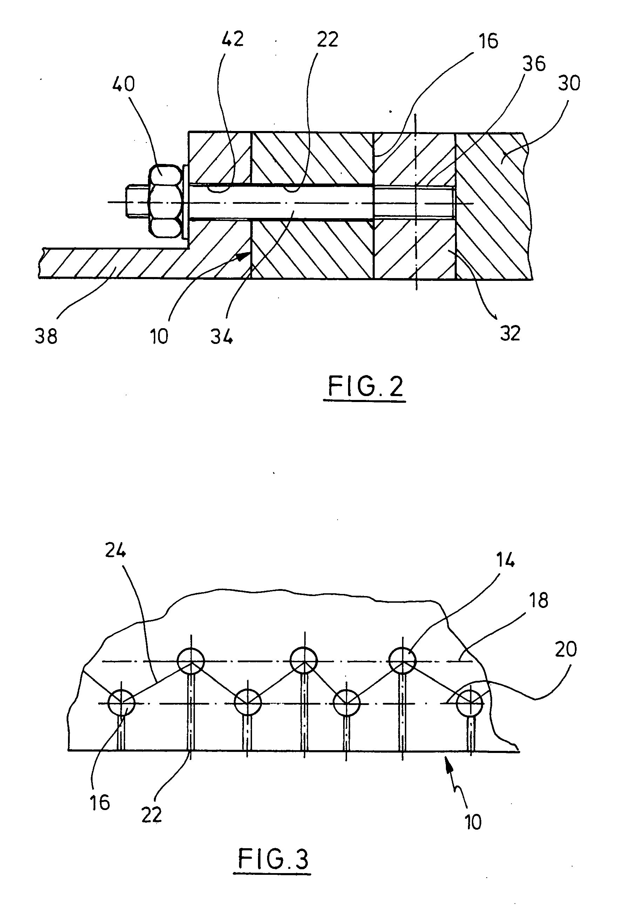

In der Figur 2 ist ein Querschnitt durch eine Wandung 30 eines an einer Rotorblattaufnahme 38 befestigten Rotorblatts gemäß Figur 1 dargestellt. Die nabenseitige Rotorblattkante 10 liegt an der Rotorblatthalterung 38 an. In die Querbohrung 16 in der Wandung 30 ist ein Querbolzen 32 eingesetzt. Mit diesem Querbolzen 32 über ein Gewinde 36 verschraubt ist ein Zugelement, das als zylindrischer Bolzen 34 ausgeführt ist. Der Bolzen 34 verläuft innerhalb einer von der nabenseitigen Rotorblattkante 10 zu der Querbohrung 16 führenden Längsbohrung 22 in der Wandung 30 und weiter durch eine Bohrung 42 in der Rotorblattaufnahme 38 hindurch, wo er mit einer Mutter 40 gesichert ist und somit das Rotorblatt mit der Rotorblatthalterung verspannt.

In der Figur 3 ist die Anordnung der Quer- und Längsbohrungen für einen Ausschnitt aus einer Rotorblattschale aus Figur 1 nochmals schematisch dargestellt. Es werden die gleichen Bezugszeichen verwendet wie in der Figur 1. Ergänzend ist mit 24 die Zickzacklinie, die jeweils benachbarte Querbohrungen 14, 16 miteinander verbindet, eingezeichnet. Der Durchmesser der Querbohrungen 14, 16 ist ungefähr doppelt so groß wie der Durchmesser der Längsbohrungen 22. Dadurch können die in die Längsbohrungen 22 einzubringenden Zugelemente 34 vorteilhaft mit einem Gewinde 36 in die in die Querbohrungen 14, 16 einzubringenden Querbolzen 32 eingeschraubt werden.

## Patentansprüche

1. Rotorblatt für Windenergieanlagen mit einer Vielzahl von quer zur Längsachse des Rotorblatts verlaufenden Querbohrungen (14, 16) im Bereich der Blattwurzel, die zur Aufnahme von Querbolzen (32) vorgesehen sind, wobei zur Befestigung des Rotorblatts an einer Rotorblatthalterung (38) Zugelemente (34) an den Querbolzen (32) angreifen, **dadurch gekennzeichnet, dass** mindestens eine der Querbohrungen (14) einen Abstand von der nabenseitigen Rotorblattkante (10) aufweist, der von dem Abstand einer weiteren Querbohrung (16) von der Rotorblattkante (10) verschieden ist.

2. Rotorblatt gemäß Anspruch 1, **dadurch gekennzeichnet, dass** die Querbohrungen (14, 16) auf zwei parallel um die Rotorblattwurzel umlaufenden Kreisen (18, 20) angeordnet sind, die einen unterschiedlichen Abstand von der nabenseitigen Rotorblattkante (10) aufweisen.

3. Rotorblatt gemäß Anspruch 2, **dadurch gekennzeichnet, dass** die Querbohrungen (14, 16) auf den beiden umlaufenden Kreisen (18, 20) versetzt angeordnet sind, sodass die Verbindungslinie zwischen benachbarten Querbohrungen eine Zickzacklinie (24) ist.

4. Rotorblatt gemäß Anspruch 3, **dadurch gekennzeichnet, dass** die Abstände zwischen je zwei auf der Zickzacklinie (24) benachbarten Querbohrungen (14, 16) gleich groß sind.

5. Rotorblatt gemäß einem der Ansprüche 2 bis 4, **dadurch gekennzeichnet, dass** der Abstand zwischen den beiden parallelen Kreisen (18, 20) etwa halb so groß ist wie der Abstand zwischen zwei auf einem Kreis benachbarten Querbohrungen (14, 16).

6. Rotorblatt gemäß einem der Ansprüche 1 bis 5, **dadurch gekennzeichnet, dass** zu jeder Querbohrung (14, 16) eine quer zur Richtung der Querbohrung (14, 16) verlaufende Längsbohrung (22) vorgesehen ist, die von der Querbohrung (14, 16) zur nabenseitigen Rotorblattkante (10) führt und die die Zugelemente (34) aufnimmt.

7. Rotorblatt gemäß einem der Ansprüche 1 bis 6, **dadurch gekennzeichnet, dass** die Querbohrungen (14, 16) als Sackbohrungen ausgeführt sind.

8. Rotorblatt gemäß einem der Ansprüche 1 bis 7, **dadurch gekennzeichnet, dass** die Wandung (30) des Rotorblatts im Bereich der Querbohrungen (14, 16) verstärkt ist.
